# EUROPÄISCHE PATENTSCHRIFT

(11) **EP 3 303 855 B1**
(45) Veröffentlichungstag und Bekanntmachung des Hinweises auf die Patenterteilung: **04.12.2019**
(21) Anmeldenummer: 16726542.0
(22) Anmeldetag: 30.05.2016
(51) Int. Cl.: F16B 21/07, F16C 11/06, B29C 65/58, B29C 65/76, F16B 5/06

(54) **KUNSTSTOFFBAUTEIL MIT BEFESTIGUNGSTEILEN**
PLASTIC COMPONENT WITH MOUNTING PARTS
COMPOSANT EN PLASTIQUE AVEC PIECES DE MONTAGE

(30) Priorität: 30.05.2015 DE 102015108583; 09.03.2016 DE 202016101303 U
(43) Veröffentlichungstag der Anmeldung: 11.04.2018
(73) Patentinhaber: Charlotte Baur Formschaumtechnik GmbH, 87719 Mindelheim (DE)
(72) Erfinder: SPITZER, David, 87719 Mindelheim (DE)
(74) Vertreter: Wiese, Gerhard
(86) Internationale Anmeldenummer: PCT/EP2016/062199
(87) Internationale Veröffentlichungsnummer: WO 2016/193232

(56) Entgegenhaltungen:
- EP-A1- 2 586 593
- EP-A2- 0 902 198
- EP-B1- 1 746 294
- DE-A1-102013 224 289
- DE-U1- 20 216 836

## Beschreibung

Die Erfindung betrifft ein Kunststoffbauteil mit Befestigungsteilen gemäß dem Oberbegriff des Patentanspruchs 1.

Ein Kunststoffbauteil mit Befestigungsteilen ist beispielsweise aus der EP 1 746 294 B1 bekannt. Beim dort gezeigten Befestigungsteil, welches als Steckkupplung ausgebildet ist, hat ein pfannenartiges Kupplungsteil einen am geschlossenen Ende einer Kupplungspfanne angeformten Brückenabschnitt, der die Kugelpfanne mit einem hülsenartigen Halteabschnitt verbindet. Der hülsenartige Halteabschnitt ist am Brückenabschnitt so angeformt, dass er die Kugelpfanne mit radialem Abstand umgibt und mit seinem freien Ende an einem ersten Bauteil festlegbar ist.

Über den Halteabschnitt und Brückenabschnitt ist die Kugelpfanne beweglich aufgehängt, so dass die Kugelpfanne mit dem darin aufgenommenen Kugelkopf des Kugelbolzens dreidimensionale schwingungsentkoppelnde Ausgleichsbewegungen zwischen den beiden Bauteilen zulässt. Gleichzeitig ermöglicht diese konstruktive Lösung eine Plattenmontage des pfannenartigen Kupplungsteils am ersten Bauteil, so dass eine besondere Fassung am ersten Bauteil nicht erforderlich ist.

Vorzugsweise sind in dem Zwischenraum zwischen der Kugelpfanne und dem hülsenförmigen Halteabschnitt über den Umfang verteilte Versteifungsstege vorgesehen, die zweckmäßigerweise im Wesentlichen tangential zum Außenumfang der Kugelpfanne verlaufen. Die Versteifungsstege verleihen dem pfannenartigen Kupplungsteil eine gewisse Steifigkeit und sorgen insbesondere für ein Rückstellen der Kugelpfanne in ihre Ausgangsstellung, wenn es zu Ausgleichsbewegungen zwischen den Bauteilen kommt.

Das pfannenartige Kupplungsteil besteht vorzugsweise aus einem Elastomer auf Polyesterbasis. In Frage kommen vor allem Materialien mit extrem hoher Reißdehnung, beispielsweise in einer Größenordnung von 100 bis 450 Prozent.

Aufgabe der Erfindung ist es, ein Kunststoffbauteil mit wenigstens einem Befestigungsteil zu schaffen, dessen in einem weichen Substrat fixierbare Befestigungsteile formschlüssig miteinander verbindbar und voneinander lösbar gestaltet sind.

Diese Aufgabe wird durch ein Kunststoffbauteil mit den Merkmalen des Anspruchs 1 gelöst. Vorteilhafte Ausgestaltungen der Erfindung sind in den Unteransprüchen angegeben.

Erfindungsgemäß besteht das Substrat des Kunststoffbauteils aus einem Weichschaum mit einem Raumgewicht von 50 kg/m³ bis 400 kg/m³ und einer Shore-A-Härte von 5 bis 100 besteht und das Befestigungselement aus einem thermoplastischen Kunststoff. Das erfindungsgemäße Kunststoffbauteil erlaubt aufgrund der Materialeigenschaften eines Thermoplasts eine sehr stabile mechanische Verbindung der Befestigungsteile und eine solide Verankerung in dem aus einem Weichschaum gebildeten Substrat.

In einem besonders bevorzugten Ausführungsbeispiel weisen das Befestigungsteil und das komplementär geformte weitere Befestigungsteil dabei einen Elastizitäts-Modul von 800 MPa bis 8.000 MPa auf. Mit einem derartigen Elastizitäts-Modul wird eine stabile dauerhafte Verrastung der Befestigungsteile aneinander gewährleistet und auch ein mehrfaches Lösen und Wiederverbinden ohne Beschädigung der Befestigungsteile ermöglicht.

Vorteilhaft ist vorgesehen, dass das Befestigungsteil mit einem Kugelkopf und das komplementär geformte weitere Befestigungsteil mit einer Kugelpfanne ausgebildet sind und so der Kugelkopf und die Kugelpfanne formschlüssig und/oder kraftschlüssig miteinander verbindbar sind. Durch diese Ausgestaltung sind das Befestigungsteil und das komplementär geformte weitere Befestigungsteil mehrmals miteinander verbindbar und wieder voneinander lösbar.

In einer bevorzugten Ausgestaltungsform weisen der Kugelkopf und die Kugelpfanne einen Durchtritts-Durchmesser von etwa 5 mm bis 20 mm auf. Mit derart kleinen Maßen sind erfindungsgemäße Befestigungsmittel sehr gut für eine Miniaturisierung geeignet, so dass beispielsweise Innenverkleidungsteile von Fahrzeugen aufgrund des verringerten Platzbedarfs kompakter gestaltet werden können.

Der Kugelkopf hat einen größten Kugeldurchmesser, der zu einem größten InnenDurchmesser der Kugelpfanne in etwa identisch ist. Dieser größte Kugeldurchmesser entspricht in etwa dem Zweifachen des Durchtritts-Durchmessers am Eintritt in die Kugelpfanne, so dass beide Teile nur durch eine elastische Verformung zusammengefügt oder getrennt werden können und im zusammengefügten Zustand sehr fest ineinander greifen.

In einer vorteilhaften Ausgestaltungsform weisen der Kugelkopf und/oder die Kugelpfanne wenigstens zwei Schlitze auf, mittels derer die oben beschriebene formschlüssige Verbindung der beiden Befestigungsteile des Befestigungselemnts mit vergleichsweise geringem Kraftaufwand realisierbar ist. Die von den Schlitzen getrennten Segmente der Kugelpfanne bzw. des Kugelkopfs werden beim Verbinden des Kugelkopfs mit der Kugelpfanne elastisch verformt, so dass sie beim Zusammenfügen ausweichen und sich deren Oberflächen nach dem Zusammenfügen wieder eng aneinander anpressen.

Sowohl das eine Befestigungsteil als auch das komplementär geformte weitere Befestigungsteil weisen ein Verankerungselement auf, die so ausgebildet sind, dass das Befestigungselement in das Substrat aus Kunststoff eingebettet und dadurch in diesem Substrat fixierbar ist.

Das jeweilige Verankerungselement weist eine Mehrzahl von Vorsprüngen und Nuten auf. Durch diese Vorsprünge und Nuten ist sowohl das Befestigungsteil als auch das komplementär geformte weitere Befestigungsteil durch eine zuverlässige Verzahnung des Materials unlösbar im Material des Substrats einbettbar und damit zuverlässig fixierbar.

In einer vorteilhaften Ausführungsform ist an den Verankerungselementen des Befestigungsteils und des komplementär geformten weiteren Befestigungsteils eine Ankerplatte ausgebildet. Diese Ankerplatte sorgt für eine stabile Verankerung der Befestigungsteile im weichen Substrat.

Durch die Ankerplatte ist das Befestigungsteil bündig in das Substrat einbettbar. Durch das bündige Einbetten ist die zum Kugelkopf weisende Oberseite der Ankerplatte des Befestigungsteils und der der Ankerplatte des komplementär geformten weiteren Befestigungsteils entgegengesetzte Rand der Kugelpfanne beim Umschäumen in einem Werkzeug jeweils exakt in einer Ebene mit dem Substrat anzuordnen.

Vorteilhafterweise sind die Verankerungselemente beider Befestigungsteile in der Länge variabel gestaltbar. Dadurch ist das Befestigungsteil mit seiner Verankerungstiefe dem Raumgewicht des Substrats und dem geforderten Elastizitäts-Modul des Befestigungselements anpassbar.

Gemäß einer besonders vorteilhaften Ausgestaltung und Verwendung wird das erfindungsgemäße Kunststoffteil als Gehäuse zur zumindest überwiegenden Umhüllung eines Bauteils ausgebildet. Vorzugsweise wird das Gehäuse aus wenigstens zwei Gehäuseteilen gebildet, die gemeinsam einen an die Kontur des Bauteils angepassten Hohlraum definieren und die mittels an den Gehäuseteilen angeordneter Befestigungsmittel zu einem im Wesentlichen geschlossenen Gehäuse dicht miteinander verbindbar sind. Durch die mehrteilige Ausbildung lassen sich erfindungsgemäße Gehäuse zur thermischen und/oder akustischen Isolation eines Bauteils in einfacher Weise auch an komplexe Formen des jeweiligen zu umhüllenden Bauteils anpassen. Durch die perfekte Anpassung an die Kontur des zu umhüllenden Bauteils werden die thermische und die Schallisolation wesentlich verbessert. Die Gehäuseteile sind leicht um das Bauteil herum anzuordnen und können durch lösbare Befestigungsmittel jederzeit wieder voneinander getrennt werden, um beispielsweise Wartungsarbeiten an den umhüllten Bauteilen auszuführen. Dadurch, dass die relativ weichen Gehäuseteile vorzugsweise nur aneinander, aber nicht am umhüllten Bauteil befestigt sind, werden auch kaum Schwingungen auf das Gehäuse übertragen, so dass sich dieses auch unter extremen Bedingungen, beispielsweise bei einer Anordnung im Motorraum eines Fahrzeugs, nicht durch Vibrationen lösen kann.

Vorteilhaft ist vorgesehen, dass die Gehäuseteile aus einem geschäumten Kunststoff, insbesondere aus Polyurethan (PUR) gebildet sind. Die Gehäuseteile sind dabei bevorzugt aus einem Schaumstoff mit einem Raumgewicht von 50 bis 400 kg/m³, insbesondere von 140 bis 300 kg/m³ und besonders mit einem Raumgewicht von etwa 170 bis 230 kg/m³ gebildet.

Eine besonders vorteilhafte Weiterbildung der Erfindung sieht vor, dass die Gehäuseteile mittels der Befestigungsteile bei geschlossenem Gehäuse unter einer Vorspannung zusammengehalten werden. Da der geschäumte Kunststoff als Material der Gehäuseteile eine hohe Eigenelastizität aufweist, können die Gehäuseteile im Bereich der sich berührenden Kanten beim Schließen der Befestigungsmittel unter leichtem Druck zusammengepresst und dabei geringfügig verformt werden, so dass das geschlossene Gehäuse anschließend eine hohe Dichtigkeit mit einer entsprechend verbesserten akustischen und/oder thermischen Isolationswirkung aufweist.

Eine verbesserte Dichtigkeit kann auch dadurch erreicht werden, dass einander zugewandte Wände der Gehäuseteile mit wenigstens einem Absatz formschlüssig ineinandergreifen. Der ineinandergreifende Absatz kann dabei sowohl rechteckig, als auch dreieckig, trapezförmig oder halbkreisförmig ausgebildet sein. Das formschlüssige Ineinandergreifen kann besonders bevorzugt auch zusätzlich zu einer elastischen Vorspannung beim Zusammenfügen der Gehäuseteile vorgesehen sein. Hierdurch ergibt sich eine dauerhaft dichte Verbindung der Gehäuseteile, bei der auch bei starker Belastung durch Vibrationen keinerlei Spalte oder andere Undichtigkeiten entstehen Die Befestigungsteile können dabei sowohl im Bereich des Absatzes als auch daneben vorgesehen sein.

Vorteilhaft sind die Gehäuseteile an wenigstens einer Kante unter Bildung eines Scharnierbereiches materialschlüssig miteinander verbunden. Ein derartiger Scharnierbereich lässt sich in einfacher Weise aus dem geschäumten Kunststoffmaterial nach Art eines Filmscharniers herstellen.

Gemäß einer vorteilhaften Weiterbildung der Erfindung ist vorgesehen, dass wenigstens eines der Gehäuseteile wenigstens einen Durchbruch zur Durchführung eines Kabels, Schlauchs oder Rohres aufweist.

Gemäß einer Variante der Erfindung kann wenigstens ein Teil wenigstens einer Wand wenigstens eines Gehäuseteils auch von einer Wand eines benachbarten Bauteils gebildet werden, die sich dicht an die benachbarten Kanten der Wände des jeweiligen Gehäuseteils anlegt.

Nachfolgend werden Ausführungsbeispiele der Erfindung unter Bezugnahme auf die Zeichnungen näher erläutert. Es zeigt:
- Fig. 1: eine Seitenansicht eines in einem Substrat eingebetteten Befestigungsteils mit einem Kugelkopf und einem Verankerungselement;
- Fig. 2: eine Draufsicht von unten auf das Befestigungsteil des Befestigungselements mit Vorsprüngen des Verankerungselements;
- Fig. 3: einen Längsschnitt durch ein als Kugelpfanne ausgebildetes komplementär geformtes weiteres Befestigungsteil;
- Fig. 4: eine Seitenansicht eines komplementär geformten, mit Schlitzen versehenen weiteren Befestigungsteils;
- Fig. 5: eine Draufsicht von unten auf das komplementär geformte weitere Befestigungsteil mit der Ankerplatte;
- Fig. 6: einen schematischen Querschnitt durch ein aus zwei Gehäuseteilen gebildetes Gehäuse;
- Fig. 7: einen schematischen Querschnitt durch eine alternative Ausführungsform eines Gehäuses, bei der eine Wand eines Gehäuseteils von einem benachbarten Bauteil gebildet wird;
- Fig. 8: einen schematischen Querschnitt durch den Verbindungsbereich zweier Gehäuseteile mit aus dem Material der Gehäuseteile gebildeten Befestigungsteilen;
- Fig. 9: einen schematischen Querschnitt durch den Verbindungsbereich zweier Gehäuseteile mit einem Absatz zur formschlüssigen Verbindung;
- Fig. 10: einen schematischen Querschnitt durch den Verbindungsbereich zweier Gehäuseteile mit einer Verbindung der Gehäuseteile durch ein Scharnier; und
- Fig. 11: einen schematischen Querschnitt durch den Verbindungsbereich zweier Gehäuseteile unter Weglassung des oberen Gehäuseteils mit einem trapezförmigen Absatz zur formschlüssigen Verbindung..

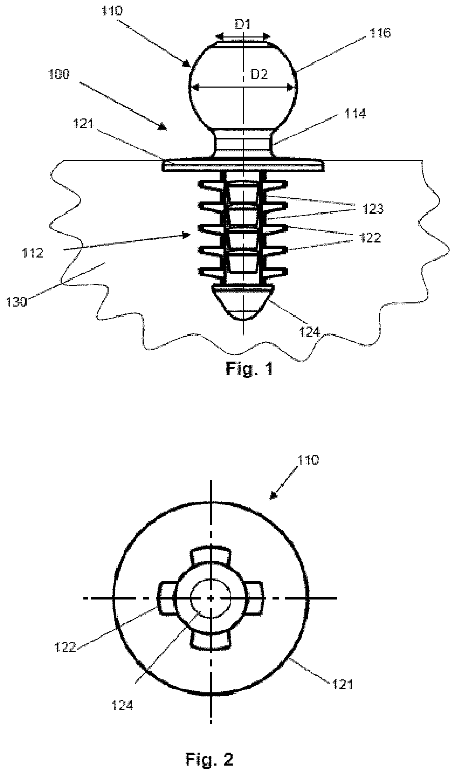

Ein in den Fig. 1 und 2 dargestelltes erstes Ausführungsbeispiel eines Kunststoffteils 100 zeigt ein Befestigungselement mit wenigstens einem Befestigungsteil 110 und mit einem Verankerungselement 112, welches in ein Substrat 130 des Kunststoffteils 100 eingebettet ist. Das Befestigungsteil 110 weist einen Kugelkopf 116 auf, der einen größten Kugeldurchmesser (D2) und einen demgegenüber kleineren Durchtritts-Durchmesser (D1) aufweist. Der Kugelkopf 116 ist an seiner dem Durchtritts-Durchmesser (D1) entgegengesetzten Ende verjüngt und mündet in einen Hals 114. Der Hals 114 dehnt sich im weiteren Verlauf aus und geht in das Verankerungselement 112 über. Den Abschluss des Verankerungselements 112 zum Hals 114 bildet eine Ankerplatte 121. Die Ankerplatte 121 schließt bei einem Einbetten des Befestigungsteils 110 mit dem Verankerungselement 112 in das Substrat 130 bündig in einer Ebene mit diesem ab.

Am Verankerungselement 112 sind eine Mehrzahl von Nuten 123 und eine Mehrzahl von an die Nuten 123 angrenzenden Vorsprüngen 122 ausgebildet. Durch diese Mehrzahl von Nuten 123 und Vorsprüngen 122 ist das Befestigungsteil 110 durch eine zuverlässige Verzahnung der Materialien in das Substrat 130 einbettbar und fixierbar. Im gezeigten Ausführungsbeispiel weist das Verankerungselement 112 fünf Vorsprünge 122 auf, die für eine ausreißfeste Verankerung im Substrat 130 sorgen.

An dem dem Kugelkopf 116 entgegengesetzten Ende des Befestigungsteils 110 mündet das Verankerungselement 112 in einen Ankerfuß 124.

In einer besonders vorteilhaften Ausführungsform ist der Kugelkopf 116 des Befestigungsteils 110 mit wenigstens einem Schlitz 117 versehen. Durch diesen wenigstens einen Schlitz 117 ist der Kugelkopf 116 elastisch verformbar und das Befestigungsteil 110 ist dadurch mit einem komplementär ausgebildeten weiteren Befestigungsteil 120 leichter formschlüssig verbindbar. Bevorzugt sind am Kugelkopf 116 vier kreuzschlitzförmig angeordnete Schlitze 117 vorgesehen.

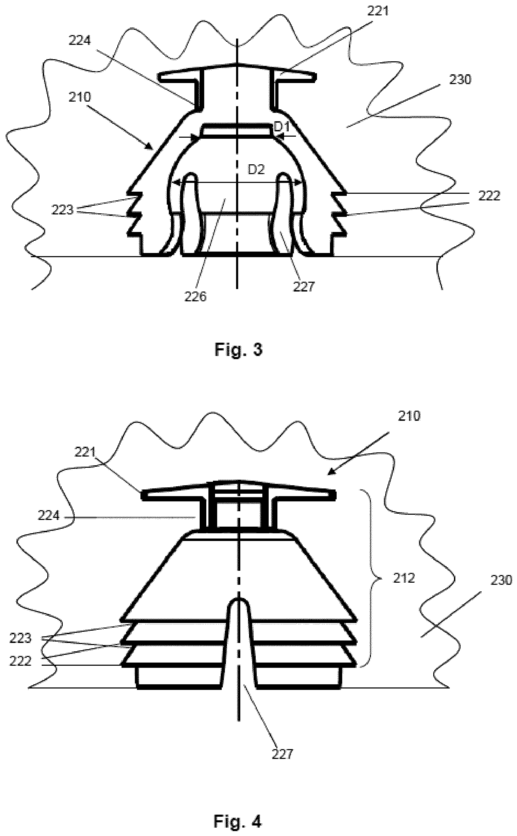

Die Fig. 3 bis 5 zeigen das komplementär ausgebildete weitere Befestigungsteil 210 mit einer Kugelpfanne 226 und einem weiteren Verankerungselement 212. Die Kugelpfanne 226 weist an ihrer größten konkaven Wölbung einen dem größten Kugeldurchmesser (D2) nahezu identischen größten Innendurchmesser auf. Nahe der Öffnung der Kugelpfanne 226 weist diese einen Durchtritts-Durchmesser (D1) auf, der im Wesentlichen dem Durchmesser (D1) des Kugelkopfs 116 entspricht.

Vorteilhaft sind am Verankerungselement 212, welches die Kugelpfanne 226 umgibt, ebenfalls eine Mehrzahl von Nuten 223 und eine Mehrzahl von an die Nuten 223 angrenzenden Vorsprüngen 222 ausgebildet. Durch diese Mehrzahl von Nuten 223 und Vorsprüngen 222 ist das weitere Befestigungsteil 210 durch eine zuverlässige Verzahnung der Materialien in einem Substrat 230 einbettbar und fixierbar. Im gezeigten Ausführungsbeispiel weist das Verankerungselement 212 drei Vorsprünge 222 auf, die für eine ausreißfeste Verankerung im Substrat 230 sorgen.

An dem der Öffnung der Kugelpfanne 226 entgegengesetzten Ende des komplementär geformten weiteren Befestigungsteils 210 ist eine Ankerplatte 221 ausgebildet. Die Ankerplatte 221 ist Teil des Verankerungselements 212 und ist durch einen Kugelpfannenhals 224 mit dem die Nuten 223 und die Vorsprünge 222 aufweisenden Bereich des Verankerungselements 212 verbunden.

Analog zur Ankerplatte 121 des ersten Befestigungsteils 110 schließt der Rand der Öffnung der Kugelpfanne 226 beim Einbetten in das Substrat 230 bündig in einer Ebene mit dem Substrat 230 ab.

Damit die Befestigungsteile 110 bzw. 210 formschlüssig miteinander verbindbar und wieder voneinander lösbar sind, sind in der Kugelpfanne 226 wenigstens zwei und bevorzugt vier Schlitze 227 ausgebildet. Die wenigstens zwei und bevorzugt vier Schlitze 227 ermöglichen ein elastisches Aufweiten der Kugelpfanne 226 bei einem Durchtritt des Kugelkopfs 116 und ein anschließendes festes Umgreifen des Kugelkopfs 116 durch die Kugelpfanne 226.

Die Befestigungsteile 110 bzw. 210 sind aus einem Thermoplastischen Kunststoff geformt. Dieser kann bevorzugt von einem Polyamid (PA), wie beispielsweise PA 6.6, optional mit einer Glasfaserverstärkung als PA 6.6 GF 30, gebildet sein. Aber auch Polyoxymethylen (POM) und andere Thermoplaste sind als Werkstoff für die Befestigungsteile 110 bzw. 210 sehr gut geeignet. Die Befestigungsteile 110 bzw. 210 weisen bevorzugt einen Elastizitätsmodul von etwa 800 bis 8000 MPa auf.

Als Substrat 130 bzw. 230 wird beispielsweise als Weichschaum geschäumtes Polyurethan (PU) mit einem Raumgewicht von etwa 120 kg/m³ bis 300 kg/m³ und einer Shore-A-Härte von 5 bis 100 verwendet.

Ein erfindungsgemäßes Befestigungsteil 110 bzw. 210 weist eine hohe Festigkeit auf und ist dennoch aufgrund der Gestaltung der Verankerungselemente 112 bzw. 212 für eine sehr kompakt bauende Verbindung mit dem sehr leichten und weichen Substrat 130 bzw. 230 geringer Dichte sehr gut geeignet.

Ein besonders bevorzugtes Anwendungsgebiet der Erfindung sind beispielsweise Verkleidungsteile im Motorraum eines Fahrzeugs oder in dessen Antriebsstrang. Aufgrund der Gestaltung des Kunststoffteils aus Weichschaum mit einer geringen Shore-A-Härte von 5 bis etwa 100 ist ein erfindungsgemäßes Kunststoffbauteil 100 besonders gut für eine thermische Isolierung, für eine akustische Dämmung und für eine Schwingungsabsorption geeignet.

Ein weiteres bevorzugtes Anwendungsgebiet der Erfindung sind beispielsweise Innenverkleidungsteile aus einem Substrat 130 bzw. 230, die zur sicheren lösbaren Befestigung an Karosseriebauteilen aus Metall mit robusten Befestigungsteilen 110 bzw. 210 versehen sein müssen.

Zur Realisierung der Erfindung genügt es, eines der Befestigungsteile 110 bzw. 210 bzw. eine Mehrzahl von voneinander beabstandeten Befestigungsteilen 110 bzw. 210 in einem Substrat 130 bzw. 230 einzubetten. Das komplementär geformte Befestigungsteil 210 bzw. 110 kann auch an einem Bauteil, an dem das das Substrat 230 bzw. 130 aufweisenden Bauteil befestigt wird, beispielsweise an einem Karosseriebauteil aus Metall oder an einer Motorabdeckung aus Kunststoff angeordnet oder ausgebildet sein.

Alternativ können auch zwei aus einem gleichen oder ähnlichen Substrat 130 bzw. 230 bestehende Kunststoffbauteile durch die Befestigungsteile 110 bzw. 210 lösbar miteinander verbunden werden. Als Anwendungsbeispiel sei ein zweiteiliges Gehäuse aus Polyurethan (PU) zur Beherbergung einer FahrzeugBatterie oder ein Schutzgehäuse für ein Mobilfunkgerät oder ein anderes stoß- und/oder temperaturempfindliches elektronisches Gerät genannt. Als weiteres Anwendungsbeispiel sei eine Motorabdeckung eines Fahrzeugs genannt.

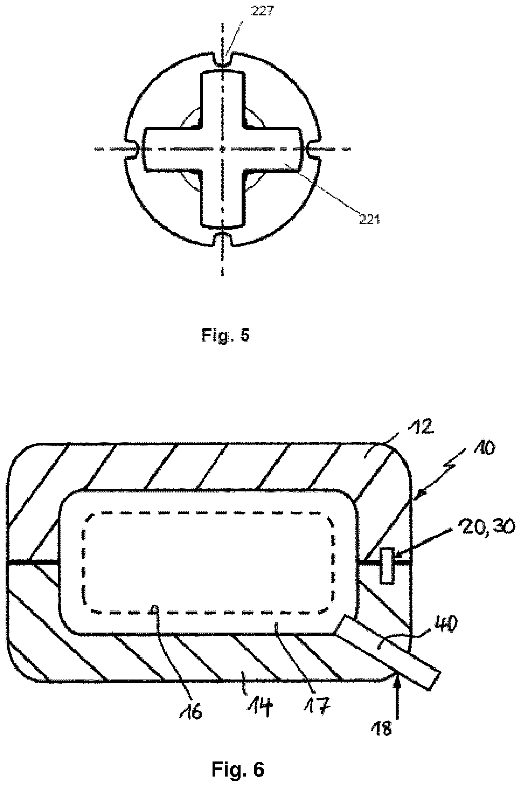

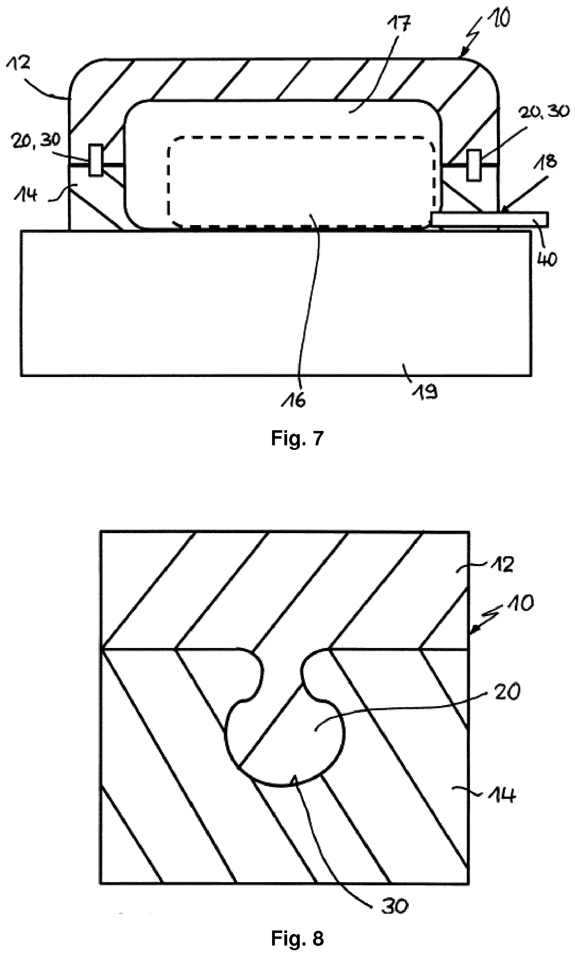

In den Figuren 6 bis 11 sind mehrere weitere Anwendungsbeispiele für erfindungsgemäße Kunststoffbauteile 100 gezeigt. In Fig. 6 ist ein als Gehäuse 10 ausgebildetes Kunststoffbauteil 100 im Querschnitt dargestellt, das aus zwei Gehäuseteilen 12 und 14 besteht. Die Wandungen der Gehäuseteile 12 und 14 werden von dem vorstehend beschriebenen Substrat 130 bzw. 230 gebildet. Die Gehäuseteile 12, 14 definieren mit ihren Innenseiten gemeinsam einen Hohlraum 17, der durch die Gehäuseteile 12, 14 im Wesentlichen dicht umschlossen wird. Das Gehäuse 10 dient zur thermischen und/oder akustischen Isolierung eines Bauteils 16, das im Hohlraum 17 angeordnet ist. Der Hohlraum 17 ist dabei mit seiner Form an die äußere Kontur des Bauteils 16 angepasst, so dass vorzugsweise - anders als in den schematischen Darstellungen gemäß Figur 6 und 7 dargestellt - nur ein geringer Luftspalt zwischen dem Bauteil 16 und den Innenwänden der Gehäuseteile 12 bzw. 14 verbleibt.

Um das Bauteil 16 mit den notwendigen Verbindungen durch Schläuche, Rohre oder Kabel 40 versehen zu können, weist das Gehäuseteil 14 im Ausführungsbeispiel gemäß Figur 6 einen Durchbruch 18 auf. Es versteht sich für den Fachmann, dass weitere Durchbrüche 18 an anderen Stellen oder auch im anderen Gehäuseteil 12 vorgesehen sein können. Die Durchbrüche 18 sind im Durchmesser so eng wie möglich gestaltet, so dass sich die Wände der Gehäuseteile 12 bzw. 14 dicht an die hindurchgeführten Schläuche, Rohre oder Kabel 40 anlegen.

In Figur 7 ist eine alternative Ausführungsform gezeigt, bei der eine Wand des Gehäuseteils 14 im unteren Bereich von einer Wand eines benachbarten Bauteils 19 ergänzt bzw. gebildet wird. Die benachbarten Wände des Gehäuseteils 14 sind dabei so gestaltet, dass sich ihre Kanten dicht an die Kontur des benachbarten Bauteils 19 anlegen.

Im Bereich der sich berührenden Kanten der Gehäuseteile 12 bzw. 14 sind Befestigungsteile 20, 30 vorgesehen, die zu einer lösbaren Verbindung der Gehäuseteile 12 bzw. 14 dienen. Die Befestigungsmittel 20, 30 sind in den Figuren 6 bis 11 nur schematisch dargestellt. Die Befestigungsmittel 20, 30 sind im Detail entsprechend der Befestigungsteile 110 bzw. 210 gemäß den Figuren 1 bis 5 ausgebildet.

Die Befestigungselemente 20, 30 bzw. 110, 210 werden mit ihren Verankerungselementen bevorzugt direkt beim Schäumen der Gehäuseteile 12 bzw. 14 in deren Kunststoffmaterial mit eingebettet. Alternativ dazu können in den Schäumwerkzeugen auch Kernbohrungen erzeugt werden, in welche die Verankerungselemente 22 bzw. 32 erst nachträglich hineingedrückt oder eingeschraubt werden

Eine nicht unmittelbar zur Erfindung gehörende, diese jedoch zumindest teilweise sinnvoll ergänzende alternative Ausführungsform, bei der die Befestigungsteile 20 bzw. 30 unmittelbar aus dem Kunststoffmaterial der Gehäuseteile 12 bzw. 14 gebildet sind, ist in Figur 8 dargestellt. Das Rastelement am Befestigungsteil 20 ist in diesem Fall unmittelbar aus dem Kunststoffmaterial des Gehäuseteils 12 geformt. Es weist eine kugelkopfförmige Form auf. Der Kugelkopf greift in eine am Gehäuseteil 14 ausgebildete komplementäre Aussparung ein und wird von dieser sicher gehalten. Das Einführen des kugelkopfförmigen Rastelements erfolgt durch eine elastische Verformung beim Einführen in die Aussparung, die sich nach dem Einführen durch die Elastizität des Kunststoffmaterials wieder selbsttätig zurückbildet. Durch eine unterschiedliche Dotierung mit Weichmachern können dabei die Rastelemente der Befestigungsteiel 20 bzw. 30 eine andere Shore-Härte aufweisen als das übrige Kunststoffmaterial der Gehäuseteile 12 bzw. 14.

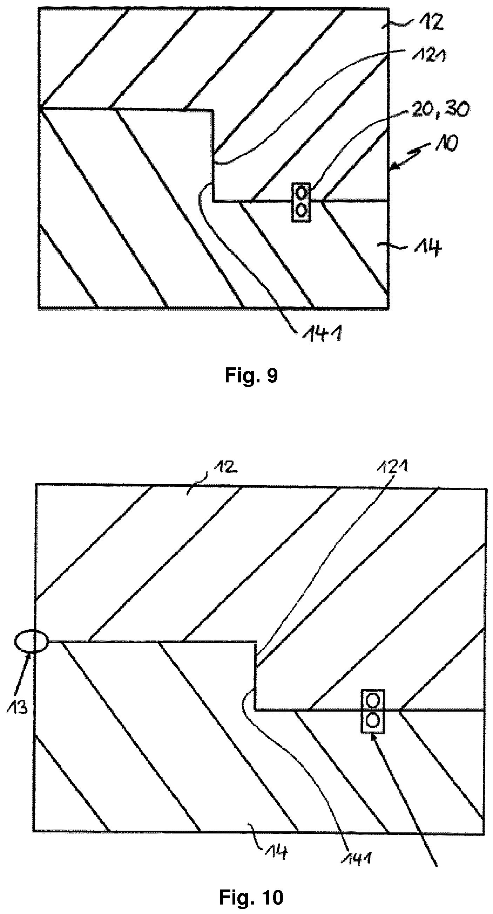

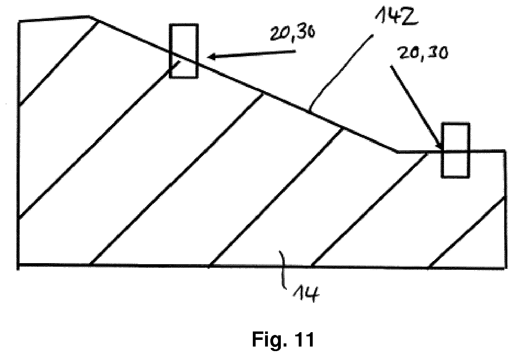

Eine verbesserte dauerhafte Dichtwirkung zwischen den sich berührenden Kanten der Gehäuseteile 12 bzw. 14 wird dadurch erreicht, dass am Gehäuseteil 12 ein Absatz 121 vorgesehen ist, der formschlüssig in einen komplementär geformten Absatz 141 am Gehäuseteil 14 eingreift. Bei der in den Figuren 9 und 10 dargestellten Ausführungsform sind die Absätze 121 bzw. 141 rechteckförmig ausgebildet. Bei der in Figur 11 dargestellten Alternative ist nur das untere Gehäuseteil 14 dargestellt, wobei der Absatz in diesem Beispiel in Form einer trapezförmigen Rampe 142 ausgebildet ist, die mit einem entsprechend komplementär geformten Absatz am hier nicht dargestellten ersten Gehäuseteil 12 zusammenwirkt. Selbstverständlich sind auch andere Formen für ineinandergreifende Vorsprünge und Vertiefungen denkbar, wie beispielsweise ein Vorsprung mit einem Querschnitt eines Halbkreises, der in eine komplementäre in Querschnitt halbkreisförmige Nut eingreift.

Die Befestigungsteile 20 bzw. 30 können im Bereich der Absätze 121 bzw. 141 oder 142 angeordnet sein - so wie in Figur 11 im Bereich der Rampe 142 - oder auch neben diesen. Es sind vorzugsweise immer mehrere Befestigungsteile 20 bzw. 30 einander gegenüberliegend am Umfang der Gehäuseteile 12 bzw. 14 im Bereich der sich berührenden Kanten verteilt angeordnet.

Bei dem in Figur 10 dargestellten Ausführungsbeispiel sind die Gehäuseteile 12 bzw. 14 im Bereich einer sich berührenden Kante durch ein Scharnier 13 miteinander verbunden, welches bevorzugt nach Art eines Filmscharnieres unmittelbar aus dem Kunststoffmaterial der Gehäuseteile 12 bzw. 14 heraus geformt ist.

Durch die Erfindung wird ein dichtes, formschlüssiges wieder verschließbares System zur Umhüllung auch sehr komplexer Bauteile gebildet, dessen Gehäuse selbstverständlich auch aus mehr als zwei Gehäuseteilen gebildet sein kann.

Die Erfindung eignet sich besonders für eine akustische und/oder thermische Isolation von Fahrzeugkomponenten, darunter auch stark belastete Komponenten im Motorraum. Es können jedoch auch Verkleidungsteile für den Fahrzeuginnenraum als erfindungsgemäße Gehäuse gestaltet werden oder Gehäuse zur Umhüllung thermisch sensibler elektrischer Bauteile, beispielsweise der Hochleistungsbatterien von Elektrofahrzeugen. Es können vorteilhaft auch Umhüllungen für Schlauchleitungen oder Rohrleitungen in der Form erfindungsgemäßer Gehäuse gestaltet sein, beispielsweise zur Umhüllung von Leitungen oder Steckverbindungen, in denen Harnstoff als Additiv (AdBlue®) transportiert wird oder Umhüllungen für die Rohrleitungen einer Hausheizung, in denen warmes Wasser zu den Heizkörpern oder Entnahmestellen transportiert wird.

**Bezugszeichenliste**

| | | | |
|---|---|---|---|
| 10 | Gehäuse | 121 | Ankerplatte |
| 12 | Gehäuseteil | 122 | Vorsprung |
| 13 | Scharnier | 123 | Nut |
| 14 | Gehäuseteil | 124 | Ankerfuß |
| 141 | Absatz | | |
| 142 | Absatz (Rampe) | 210 | Befestigungsteil |
| 16 | Bauteil | 212 | Verankerungselement |
| 17 | Hohlraum | 221 | Ankerplatte |
| 18 | Durchbruch | 222 | Vorsprung |
| 19 | Bauteil (Motor) | 223 | Nut |
| 20 | Befestigungsteil | 224 | Kugelpfannenhals |
| 40 | Kabel | 226 | Kugelpfanne |
| | | 227 | Schlitz |
| 100 | Kunststoffbauteil | | |
| | | 130 | Substrat |
| 110 | Befestigungsteil | 230 | Substrat |
| 112 | Verankerungselement | | |
| 114 | Hals | D1 | Durchtritts-Durchmesser |
| 116 | Kugelkopf | D2 | (größter) Kugeldurchmesser |
| 117 | Schlitz | | |

## Patentansprüche

1. Kunststoffbauteil (10; 12; 14; 100) mit einem Substrat (130; 230) aus einem Kunststoff und mit wenigstens einem ersten Befestigungsteil (110), das für einen Formschluss mit einem komplementär geformten weiteren Befestigungsteil (210) ausgebildet ist und wenigstens ein Verankerungselement (112; 212), zur Einbettung und Fixierung im Substrat (130; 230) aufweist, **dadurch gekennzeichnet, dass** das Substrat (130; 230) aus einem Weichschaum mit einem Raumgewicht von 50 kg/m³ bis 400 kg/m³ und einer Shore-A-Härte von 5 bis 100 besteht und dass das Befestigungsteil (110; 210) aus einem thermoplastischen Kunststoff besteht und das Verankerungselement (112; 212) wenigstens zwei Vorsprünge (122; 222) und wenigstens zwei Nuten (123; 223) aufweist und somit durch eine zuverlässige Verzahnung unlösbar im Material des Substrats (130; 230) einbettbar ist.

2. Kunststoffbauteil nach Anspruch 1, **dadurch gekennzeichnet, dass** das wenigstens eine Befestigungsteil (110) und/oder das komplementär geformte weitere Befestigungsteil (210) einen Elastizitäts-Modul von 800 MPa bis 8.000 MPa aufweisen.

3. Kunststoffbauteil nach Anspruch 1 und 2, **dadurch gekennzeichnet, dass** das Befestigungsteil (110) und das komplementär geformte weitere Befestigungsteil (210) durch einen Kugelkopf (116) und eine Kugelpfanne (226) formschlüssig und/oder kraftschlüssig miteinander verbindbar sind.

4. Kunststoffbauteil nach Anspruch 3, **dadurch gekennzeichnet, dass** der Kugelkopf (116) und die Kugelpfanne (226) einen Durchtritts-Durchmesser (D1) von 5 mm bis 20 mm aufweisen.

5. Kunststoffbauteil nach Anspruch 4, **dadurch gekennzeichnet, dass** der Kugelkopf (116) einen größten Kugeldurchmesser (D2) aufweist, der in etwa dem Zweifachen des Durchtritts-Durchmessers (D1) entspricht.

6. Kunststoffbauteil nach einem der Ansprüche 3 bis 5, **dadurch gekennzeichnet, dass** der Kugelkopf (116) und/oder die Kugelpfanne (226) wenigstens zwei Schlitze (117; 217) aufweisen.

7. Kunststoffbauteil) nach einem der vorhergehenden Ansprüche, **dadurch gekennzeichnet, dass** an den Verankerungselementen (112; 212) jeweils eine Ankerplatte (121; 221) ausgebildet ist.

8. Kunststoffbauteil nach einem der vorhergehenden Ansprüche, **dadurch gekennzeichnet, dass** die Befestigungsteile (110; 210) bündig in das Substrat (130; 230) eingebettet sind.

9. Kunststoffbauteil nach einem der vorhergehenden Ansprüche, **dadurch gekennzeichnet, dass** das Befestigungsteil (110) und/oder das weitere Befestigungsteil (210) in der Länge variabel gestaltbar ist.

10. Kunststoffbauteil nach einem der vorhergehenden Ansprüche, **dadurch gekennzeichnet, dass** es als Gehäuse (10) zur zumindest überwiegenden Umhüllung eines Bauteils (16; 19) ausgebildet ist.

11. Kunststoffbauteil nach Anspruch 10, **dadurch gekennzeichnet, dass** das Gehäuse (10) aus wenigstens zwei Gehäuseteilen (12; 14) gebildet wird, die gemeinsam einen an die Kontur des Bauteils (16; 19) angepassten Hohlraum (17) definieren und die mittels an den Gehäuseteilen (12; 14) angeordneter Befestigungsteile (20; 30; 110, 210) zu einem im Wesentlichen geschlossenen Gehäuse (10) dicht miteinander verbindbar sind.

12. Kunststoffbauteil nach wenigstens einem der vorhergehenden Ansprüche, **dadurch gekennzeichnet, dass** das Substrat (130; 230) oder die Gehäuseteile (12; 14) aus Polyurethan (PUR) gebildet sind.

13. Kunststoffbauteil nach wenigstens einem der vorhergehenden Ansprüche 10 bis 12, **dadurch gekennzeichnet, dass** die Gehäuseteile (12; 14) mittels der Befestigungsmittel (20; 30; 110, 210) bei geschlossenem Gehäuse (10) unter einer Vorspannung zusammengehalten werden.

14. Kunststoffbauteil nach wenigstens einem der vorhergehenden Ansprüche 11 bis 14, **dadurch gekennzeichnet, dass** die Gehäuseteile (12; 14) an wenigstens einer Kante unter Bildung eines Scharnierbereiches (13) materialschlüssig miteinander verbunden sind.

## Claims

1. A plastic component (10; 12; 14; 100) with a substrate (130; 230) composed of a plastic and at least one first fastening piece (110) that is embodied for a form-fitting engagement with a complementarily formed other fastening piece (210) and has at least one anchoring element (112; 212) for being embedded and fixed in position in the substrate (130; 230), **characterized in that** the substrate (130; 230) is composed of soft foam with a weight per unit volume of 50 kg/m³ to 400 kg/m³ and a Shore A hardness of 5 to 100, and **in that** the fastening element (110; 210) is composed of a thermoplastic plastic, and the anchoring element (112; 212) has at least two projections (122; 222) and at least two grooves (123; 223), and therefore can be non-detachably embedded in the material of the substrate (130; 230) by means of a reliable meshing.

2. The plastic component according to claim 1, **characterized in that** the at least one fastening piece (110) and/or the complementarily formed other fastening piece (210) have/has a modulus of elasticity of 800 MPa to 8,000 MPa.

3. The plastic component according to claim 1 and 2, **characterized in that** the fastening piece (110) and the complementarily formed other fastening piece (210) can be connected to each other through form-fitting and/or force-locking engagement by means of a ball head (116) and ball socket (226).

4. The plastic component according to claim 3, **characterized in that** the ball head (116) and ball socket (226) have a passage diameter (D1) of 5 mm to 20 mm.

5. The plastic component according to claim 4, **characterized in that** the ball head (116) has a maximum ball head diameter (D2) that corresponds approximately to twice the passage diameter (D1).

6. The plastic component according to one of claims 3 to 5, **characterized in that** the ball head (116) and/or the ball socket (226) have/has at least two slits (117; 217).

7. The plastic component according to one of the preceding claims, **characterized in that** the anchoring elements (112; 212) each have an anchoring plate (121; 221).

8. The plastic component according to one of the preceding claims, **characterized in that** the fastening pieces (110; 210) are embedded in the substrate (130; 230) so that they are flush.

9. The plastic component according to one of the preceding claims, **characterized in that** the fastening piece (110) and/or the other fastening piece (210) can be embodied with a variable length.

10. The plastic component according to one of the preceding claims, **characterized in that** it is embodied as a housing (10) for at least predominantly enclosing a component (16; 19).

11. The plastic component according to claim 10, **characterized in that** the housing (10) is composed of at least two housing parts (12; 14) that cooperate to define a cavity (17), which is adapted to the contour of the component (16; 19), and that can be tightly connected to each other to form an essentially closed housing (10) by means of fastening pieces (20; 30; 110, 210) provided on the housing parts (12; 14).

12. The plastic component according to at least one of the preceding claims, **characterized in that** the substrate (130; 230) or the housing parts (12; 14) is/are composed of polyurethane (PUR).

13. The plastic component according to at least one of the preceding claims 10 through 12, **characterized in that** the housing parts (12; 14) are held together by the fastening means (20; 30; 110, 210) under a prestressing force when the housing (10) is closed.

14. The plastic component according to at least one of the preceding claims 11 through 14, **characterized in that** the housing parts (12; 14) are integrally joined to one another along at least one edge, forming a hinge region (13).

## Revendications

1. Composant en plastique (10 ; 12 ; 14 ; 100) comprenant un substrat (130 ; 230) en plastique et comportant au moins une première pièce de fixation (110) conçue pour un engagement positif avec une autre pièce de fixation (210) de forme complémentaire, et au moins un élément d'ancrage (112 ; 212) destiné à être incorporé et fixé dans le substrat (130 ; 230), **caractérisé en ce que** le substrat (130 ; 230) est constitué d'une mousse souple ayant une densité de 50 kg/m³ à 400 kg/m³ et une dureté Shore A de 5 à 100, et **en ce que** la pièce de fixation (110 ; 210) est formée à base d'une matière thermoplastique, et l'élément d'ancrage (112 ; 212) présente au moins deux saillies (122 ; 222) et au moins deux rainures (123 ; 223) et peut ainsi être incorporé de manière indissociable dans le matériau du substrat (130 ; 230), grâce à une denture fiable.

2. Composant en plastique selon la revendication 1, **caractérisé en ce que** l'au moins une pièce de fixation (110) et/ou la pièce de fixation supplémentaire de forme complémentaire (210) ont un module d'élasticité de 800 MPa à 8 000 MPa.

3. Composant en plastique selon les revendications 1 et 2, **caractérisé en ce que** la pièce de fixation (110) et la pièce de fixation supplémentaire de forme complémentaire (210) peuvent être reliées par verrouillage positif et/ou par verrouillage forcé, par l'intermédiaire d'une tête sphérique (116) et d'une douille sphérique (226).

4. Composant en plastique selon la revendication 3, **caractérisé en ce que** la tête sphérique (116) et la douille sphérique (226) présentent un diamètre de passage (D1) de 5 mm à 20 mm.

5. Composant en plastique selon la revendication 4, **caractérisé en ce que** la tête sphérique (116) a un plus grand diamètre sphérique (D2), qui correspond environ au double du diamètre de passage (D1).

6. Composant plastique selon l'une quelconque des revendications 3 à 5, **caractérisé en ce que** la tête sphérique (116) et/ou la douille sphérique (226) présente au moins deux fentes (117 ; 217).

7. Composant en plastique selon l'une quelconque des revendications précédentes, **caractérisé en ce qu'**une plaque d'ancrage (121 ; 221) est formée sur les éléments d'ancrage (112 ; 212).

8. Composant en matière plastique selon l'une quelconque des revendications précédentes, **caractérisé en ce que** les pièces de fixation (110 ; 210) sont incorporées à fleur du substrat (130 ; 230).

9. Composant en plastique selon l'une quelconque des revendications précédentes, **caractérisé en ce que** la pièce de fixation (110) et/ou la pièce de fixation supplémentaire (210) est de longueur variable.

10. Composant en matière plastique selon l'une quelconque des revendications précédentes, **caractérisé en ce qu'**il est conçu sous la forme d'un boîtier (10) permettant d'enfermer au moins de manière prépondérante un composant (16 ; 19).

11. Composant en plastique selon la revendication 10, **caractérisé en ce que** le boîtier (10) est formé d'au moins deux parties de boîtier (12 ; 14) qui définissent ensemble une cavité (17) adaptée au contour du composant (16 ; 19) et qui peuvent être reliées de manière étanche entre elles, au moyen de pièces de fixation (20 ; 30 ; 110 ; 210) disposées sur les parties de boîtier (12 ; 14), pour former un boîtier sensiblement fermé (10).

12. Composant en plastique selon au moins l'une quelconque des revendications précédentes, **caractérisé en ce que** le substrat (130 ; 230) ou les parties de boîtier (12 ; 14) sont formés en polyuréthane (PUR).

13. Composant en plastique selon l'une des revendications 10 à 12, **caractérisé en ce que** les parties de boîtier (12 ; 14) sont maintenues ensemble sous une précontrainte au moyen des moyens de fixation (20 ; 30 ; 110 ; 210) lorsque le boîtier (10) est fermé.

14. Composant en matière plastique selon au moins l'une quelconque des revendications précédentes 11 à 14, **caractérisé en ce que** les parties de boîtier (12 ; 14) sont reliées entre elles par liaison de matière, au niveau d'au moins un bord, formant une zone de charnière (13).
